# EUROPÄISCHE PATENTSCHRIFT

(11) **EP 1 078 956 B1**
(45) Veröffentlichungstag und Bekanntmachung des Hinweises auf die Patenterteilung: **04.06.2003**
(21) Anmeldenummer: 00116666.9
(22) Anmeldetag: 02.08.2000
(51) Int. Cl.: C09C 1/00, C08K 3/22

(54) **Wolframhaltige Nickel-Antimon-Rutilmischphasenpigmente**
Nickel-antimony-rutile mixed-phase pigments containing tungsten
Pigments à phases mixtes de structure rutile contenant du nickel, de l'antimoine et du tungstène

(30) Priorität: 26.08.1999 DE 19940413
(43) Veröffentlichungstag der Anmeldung: 28.02.2001
(73) Patentinhaber: BASF AKTIENGESELLSCHAFT, 67056 Ludwigshafen (DE)
(72) Erfinder: Reisacher, Hansulrich, Dr., 67133 Maxdorf (DE); Mauthe, Uwe, 68239 Mannheim (DE)

(56) Entgegenhaltungen:
- EP-A- 0 325 987
- DE-B- 1 287 236
- US-A- 5 759 256

## Beschreibung

Die vorliegende Erfindung betrifft neue wolframhaltige Nickel-Antimon -Rutilmischphasenpigmente, bei denen das Molverhältnis Nickel/Wolfram ≥ 4 beträgt und die 65 bis 90 Gew.-% Titandioxid 2 bis 7 Gew.-% Nickel (II) oxid, 7 bis 25 Gew.-% Antimon (V) oxid und 0,05 bis 4 Gew.-% Wolfram (VI)-oxid enthalten.

Außerdem betrifft die Erfindung die Herstellung dieser Pigmente und ihre Verwendung zum Einfärben von Kunststoffen, Lacken, Druckfarben und keramischen Glasuren.

Rutilmischphasenpigmente sind schon seit langem bekannt. Darunter versteht man Buntpigmente, die durch den Einbau farbiger Übergangsmetallkationen in das Kristallgitter des Rutils erhalten werden. Vornehmlich werden dabei solche Metallkationen als Gastkomponente in das Rutil-Wirtsgitter eingebaut, deren Kationenradius größenordnungsmäßig mit dem Titan(IV)-Ionenradius vergleichbar ist. Weicht die Oxidationszahl des farbigen Kations von der des Titan(IV) ab, so wird zum statistischen Valenzausgleich ein weiteres Kation mit anderer, entsprechend höherer oder niedrigerer, Oxidationszahl eingebaut. Die Mischphasenpigmente können zusätzlich Lithium- oder Natriumfluorid enthalten, die vielfach als Flußmittel (Mineralisatoren) bei der Herstellung der Pigmente durch Calcinierung eingesetzt werden.

Große technische Bedeutung haben insbesondere Nickel- und Chrom-Rutilmischphasenpigmente erlangt, die neben Nickel(II) bzw. Chrom(III) zusätzlich noch Antimon (V) enthalten (Nickelrutilgelb bzw. Chromrutilgelb; vgl. Ullmann's Encyclopedia of Industrial Chemistry, 5th Ed., Vol. A20, 307 - 308 (1992); US-A-2 257 278). Neben diesen beiden bedeutenden Rutilmischphasenpigmenten ist eine Vielzahl von weitere Metallkationen enthaltenden Mischphasen beschrieben. Aus der US-A-3 956 007 sind beispielsweise antimonfreie Nickel-Wolfram-Rutilmischphasen bekannt, die zusätzlich Zink, Cer, Magnesium oder Lithium enthalten. In der DE-A-12 87 236 werden Nickel-Rutilmischphasen beschrieben, in die Wolfram(VI), Wolfram(VI) und Natriumfluorid, Wolfram(VI), Antimon(V) und Natriumfluorid bzw. Wolfram(VI), Antimon(V), Kupfer(II) und Natriumfluorid eingebaut sind. Das Molverhältnis Nickel/Wolfram der gleichzeitig Wolfram und Antimon enthaltenden NickelNickel-Rutilmischphasen liegt jedoch nur bei 1,67, und die Farbstärke dieser Pigmente unterscheidet sich nicht von analogen Pigmenten, die kein Wolfram enthalten. Die US-A 5 759 256 betrifft Nickel-Antimon-Rutilmischphasen und erwähnt, daß verschiedene Kationen, z. B. auch Wolfram (VI), in diesen Mischphasen enthalten sein können.

Die bekannten Nickel-Rutilmischphasenpigmente sind nicht immer zufriedenstellend. Insbesondere bestand Bedarf an farbstärkeren gelben Pigmenten.

Der Erfindung lag daher die Aufgabe zugrunde, diesem Mangel abzuhelfen und Nickel-Rutilmischphasenpigmente bereitzustellen, die vorteilhafte Anwendungseigenschaften, insbesondere auch eine hohe Farbstärke, aufweisen.

Demgemäß wurden wolframhaltige Nickel-Antimon-Rutilmischphasenpigmente gefunden, bei denen das Molverhältnis Nickel/Wolfram ≥ 4 beträgt und die 65 bis 90 Gew.-% Titandioxid, 2 bis 7 Gew.-% Nickel (II) oxid, 7 bis 25 Gew.-% Antimon(V)oxid und 0,05 bis 4 Gew.-% Wolfram(VI)oxid enthalten.

Außerdem wurde ein Verfahren zur Herstellung dieser Nickel-Antimon-Rutilmischphasenpigmente gefunden, welches dadurch gekennzeichnet ist, daß man die Oxide oder Oxidhydrate von Titan, Nickel, Antimon und Wolfram oder in die Oxide überführbare Salze dieser Metalle intensiv mischt und die erhaltene Mischung unter oxidierender Atmosphäre bei 900 bis 1200°C calciniert.

Weiterhin wurde die Verwendung dieser Nickel-Antimon-Rutilmischphasenpigmente zur Einfärbung von Kunststoffen, Lacken, Druckfarben und keramischen Glasuren gefunden.

Die erfindungsgemäßen Rutilmischphasenpigmente des Dreistoffsystems Titan, Nickel und Antimon enthalten als wesentlichen weiteren Bestandteil Wolframoxid. Das Molverhältnis Nickel/Wolfram beträgt dabei ≥ 4, bevorzugt 4 bis 150, besonders bevorzugt 5 bis 100 und ganz besonders bevorzugt 6 bis 70.

Die erfindungsgemäßen Rutilmischphasenpigmente zeichnen sich durch vorteilhafte koloristische Eigenschaften, insbesondere ihre hohe Farbstärke und ihren brillanten gelben Farbton (Farbwinkel Hue von 94 bis 98°, Chroma C* > 60, insbesondere ≥ 63), aus. Weitere vorteilhafte Anwendungseigenschaften sind ihre guten Echtheiten, wobei vor allem die hohe Thermostabilität, Chemikalienbeständigkeit und Wetterechtheit zu nennen sind.

Die erfindungsgemäßen Rutilmischphasenpigmente können vorteilhaft nach dem erfindungsgemäßen Verfahren hergestellt werden, indem man die Metalloxide oder -oxidhydrate oder in die Oxide überführbare Metallsalze intensiv mischt und anschließend eine übliche Calcinierung vornimmt.

Geeignete Metallsalze, die bei Calcinierung die gewünschten Oxide liefern, sind z.B. Carbonate, Sulfate, Chloride, Nitrate und Hydroxide.

Im einzelnen seien beispielhaft folgende bevorzugte Ausgangsverbindungen genannt:
- TiO₂ in den Modifikationen Rutil und Anatas, das bevorzugt nicht oberflächenbehandelt ist und dessen BET-Oberfläche bevorzugt 2 bis 20 m²/g beträgt, sowie Titanoxidhydrate wie Metatitansäure H₂TiO₃ und Titansäure H₄TiO₄;
- Nickel(II)carbonat, Nickel(II)sulfat, Nickel(II)chlorid, Nickel(II)nitrat sowie Nickel(II)hydroxid;
- Antimon(III)oxid, dessen BET-Oberfläche bevorzugt 1 bis 5 m²/g beträgt und das bei der Calcinierung zu Antimon (V) oxid oxidiert wird;
- Wolframsäure H₂WO₄ bzw. WO₃ · H₂O sowie Wolfram (VI) oxid.

Der erste Schritt des erfindungsgemäßen Verfahrens besteht darin, die gewählten Ausgangsverbindungen intensiv zu mischen, was sowohl naß als auch insbesondere trocken möglich ist.

Man kann die Mischung der Ausgangsverbindungen jedoch auch herstellen, indem man die Hydroxide und/oder Carbonate gemeinsam aus wäßrigen Lösungen löslicher Salze der Metalle ausfällt und den erhaltenen Niederschlag abfiltriert und trocknet.

Der zweite Schritt des erfindungsgemäßen Verfahrens, die Calcinierung, wird bei 900 bis 1200°C unter oxidierenden Bedingungen vorgenommen. Zur Aufrechterhaltung der oxidierenden Atmosphäre können Oxidationsmittel wie Luft oder Salpetersäure in den Ofen eingeleitet werden. Üblicherweise dauert die Calcinierung 0,5 bis 10 h, insbesondere 0,5 bis 2 h.

Das abgekühlte Calcinierungsprodukt wird zweckmäßigerweise einem Zerkleinerungsschritt unterzogen, wobei eine Naßmahlung insbesondere in wäßriger Suspension bevorzugt ist. Die bei der Naßmahlung erhaltene Suspension wird anschließend getrocknet, wofür auch ein Sprühtrockner verwendet werden kann, der üblicherweise ein Granulat aus überwiegend kugelförmigen, etwa 5 bis 3000 µm großen Pigmentteilchen liefert.

Selbstverständlich können die erfindungsgemäßen Rutilmischphasenpigmente auch einer für derartige Pigmente üblichen Nachbehandlung mit Laugen oder Beschichtung mit Metalloxiden unterzogen werden (z.B. DE-A-27 14 654, DE-A-29 36 746, EP-A-75 197).

Die erfindungsgemäßen Rutilmischphasenpigmente können vorteilhaft zur Einfärbung von Kunststoffen, Lacken, Druckfarben und keramischen Glasuren verwendet werden. Sie zeichnen sich dabei durch hohe Thermostabilität, gute Chemikalienbeständigkeit und gute Wetterechtheit sowie insbesondere durch hohe Farbstärke und hohe Farbtonreinheit aus.

### Beispiele

### Herstellung und Anwendung von erfindungsgemäßen Rutilmischphasenpigmenten

Zur Beurteilung ihrer koloristischen Eigenschaften wurden die erhaltenen Rutilmischphasenpigmente in PVC, einen Alkyd-Melamin-Einbrennlack bzw. in Poly(acrylonitril-butadien-styrol) (ABS) eingearbeitet. Anschließend wurden die CIELAB-Werte (Farbwinkel Hue, Chroma C*, Helligkeit L) mit einem Zeiss-Spektralphotometer RFC 16 unter Verwendung der Normlichtart D65 gemessen. Die Bestimmung der Farbstärke (Angabe der Färbeäquivalente FAE) erfolgte dann über die Weißaufhellung der jeweiligen Ausfärbung. Dabei wurde der Ausfärbung bzw. der eingefärbten Lackierung, die das jeweils analog, jedoch ohne Zusatz von Wolframsäure hergestellte Pigment enthielten, der FAE-Wert 100 (Standard) zugeordnet. FAE-Werte < 100 bedeuten eine höhere Farbstärke als beim Standard, FAE-Werte > 100 entsprechend eine kleinere Farbstärke. Die PVC-Ausfärbung wurde folgendermaßen hergestellt: Eine Mischung aus 3,5 g PVC-Paste (Falcosol® K-ST 6101, Fa. Follan, Minden) und 1,0 g des jeweiligen Pigments wurde auf einer Farbausreibemaschine (Fa. Engelsmann) mit 2 x 50 Umdrehungen bei 50 kg Belastung ausgerieben, mit einer Schichtdicke von 400 µm auf eine Glasscheibe aufgezogen und 15 min bei 160°C eingebrannt. Die Herstellung der weißaufgehellten PVC-Ausfärbung erfolgte analog aus 3,5 g PVC-Paste, 0,8 g Titandioxid 2056 (Fa. Kronos) und 0,4 g des jeweiligen Pigments.

Der eingefärbte Lack wurde wie folgt hergestellt: Eine Mischung von 24 g Alkyd-Melamin-Einbrennlack (50 Gew.-% Feststoffanteil) und 6 g des jeweiligen Pigments wurde mit 80 g Glasperlen (2 mm Durchmesser) 30 min mit einem Skandexgerät geschüttelt, dann mit einem Filmausziehgerät Typ 238 II (Fa. Erichsen) auf Chromolux-Karton in 150 µm Naßfilmdicke aufgezogen und nach 10-minütigem Ablüften 30 min bei 120°C eingebrannt.

Die Herstellung des weißaufgehellten Lacks erfolgte analog aus 24 g Alkyd-Melamin-Einbrennlack, 3 g Titandioxid und 3 g des jeweiligen Pigments.

Der eingefärbte, weißaufgehellte ABS-Spritzling wurde wie folgt hergestellt: Ein Gemisch aus 98 Gew.-% ABS, 1 Gew.-% Titandioxid und 2 Gew.-% des jeweiligen Pigments wurde bei 240°C extrudiert und in eine Form (Länge 60 mm, Breite 45 mm, Höhe 2 mm) gespritzt.

Das ohne Zusatz von Wolframsäure hergestellte Pigment hatte in den einzelnen Anwendungsmedien folgende CIELAB-Werte (in ABS Abmischung mit Titandioxid im Gewichtsverhältnis 2:1):
- PVC:: H = 91,8°; C* = 61,2; L = 81,4;
- Alkyd-Melamin-Lack:: H = 96,5°; C* = 61,5; L = 88,1;
- ABS:: H = 98,2°; C* = 39,6; L = 86,9.

### Beispiel 1

40 g Metatitansäure (80 Gew.-% TiO₂), 6,4 g Antimontrioxid, 3,2 g Nickelcarbonat und 1,04 g Wolframsäure (67 Gew.-% Wolfram) wurden intensiv vermischt. Die erhaltene Mischung wurde anschließend in einem elektrisch beheizten Kammerofen 120 min bei 1150°C calciniert.

30 g des nach Abkühlen erhaltenen relativ weichen Calcinierungsprodukts wurden nach Zugabe von 60 g Wasser unter Verwendung von 250 g Glasperlen (1 mm Durchmesser) 25 min in einer Fliehkraftmühle (300 ml Mahlvolumen) gemahlen. Nach Abtrennung der Glasperlen wurde das Mahlgut mit Wasser gewaschen und bei 120°C getrocknet.

Das erhaltene brillante Gelbpigment hatte in PVC folgende Farbwerte: dH = 1,7; dC* = 3,2; dL = 1,2; FAE = 86.

### Beispiel 2

Es wurde analog Beispiel 1 vorgegangen, jedoch wurden 0,25 g Wolframsäure eingesetzt.

Das erhaltene brillante Gelbpigment hatte in PVC folgende Farbwerte: dH= 2,1; dC* = -0,5; dL = 1,0; FAE = 91.

### Beispiel 3

Es wurde analog Beispiel 1 vorgegangen, jedoch wurden 0,52 g Wolframsäure eingesetzt.

Das erhaltene brillante Gelbpigment hatte in PVC folgende Farbwerte: dH = 2,3; dC* = 2,3; dL = 1,2; FAE = 88.

### Beispiel 4

Es wurde analog Beispiel 1 vorgegangen, jedoch wurden 0,74 g Wolframsäure eingesetzt.

Das erhaltene brillante Gelbpigment hatte in PVC folgende Farbwerte: dH = 1,2; dC* = 4,6; dL = 1,0; FAE = 90.

### Beispiel 5

Es wurde analog Beispiel 1 vorgegangen, jedoch wurden 1,48 g Wolframsäure eingesetzt.

Das erhaltene brillante Gelbpigment hatte in PVC folgende Farbwerte: dH = -0,5; dC* = 4,9; dL = -1,5; FAE = 92.

### Beispiel 6

100 kg Metatitansäure (80 Gew.-% TiO₂), 16,4 kg Antimontrioxid, 7,8 kg Nickelcarbonat und 1,3 kg Wolframsäure (67 % Wolfram) wurden intensiv vermischt. Die erhaltene Mischung wurde anschließend in einem Drehrohrofen unter Einleiten von Luft (1 m³/h) bei 1150°C und einem Durchsatz von 6,5 kg/h calciniert.

Die Mahlung des Calcinierungsprodukts wurde analog Beispiel 1 vorgenommen.

Das erhaltene brillante Gelbpigment hatte folgende Farbwerte:
- PVC:: dH = 2,4; dC* = 3,9; dL = 2,5; FAE = 86;
- Alkyd-Melamin-Lack:: dH = -1,1; dC* = 3,4; dL = -2,3; FAE = 86;
- ABS:: dH = -0,4; dC* = 1,6; dL = 1,4; FAE = 88.

## Patentansprüche

1. Wolframhaltige Nickel-Antimon-Rutilmischphasenpigmente, bei denen das Molverhältnis Nickel/Wolfram ≥ 4 beträgt und die 65 bis 90 Gew.-% Titandioxid, 2 bis 7 Gew.-% Nickel (II) oxid, 7 bis 25 Gew.-% Antimon (V) oxid und 0,05 bis 4 Gew.-% Wolfram(VI)oxid enthalten.

2. Nickel-Antimon-Rutilmischphasenpigmente nach Anspruch 1, bei denen das Molverhältnis Antimon/Wolfram 4 bis 150 beträgt.

3. Verfahren zur Herstellung von Nickel-Antimon-Rutilmischphasenpigmenten gemäß Anspruch 1 oder 2, **dadurch gekennzeichnet, daß** man die Oxide oder Oxidhydrate von Titan, Nickel, Antimon und Wolfram oder in die Oxide überführbare Salze dieser Metalle intensiv mischt und die erhaltene Mischung unter oxidierender Atmosphäre bei 900 bis 1200°C calciniert.

4. , Verfahren nach Anspruch 3, **dadurch gekennzeichnet, daß** man das Calcinierungsprodukt einer Trockenmahlung oder einer Naßmahlung mit anschließender Trocknung unterzieht.

5. Verwendung von Nickel-Antimon-Rutilmischphasenpigmenten gemäß Anspruch 1 oder 2 zur Einfärbung von Kunststoffen, Lacken, Druckfarben und keramischen Glasuren.

## Claims

1. A tungsten nickel-antimony-rutile mixed-phase pigment in which the nickel/tungsten molar ratio is ≥ 4 and which comprises from 65 to 90% by weight of titanium dioxide, from 2 to 7% by weight of nickel(II) oxide, from 7 to 25% by weight of antimony(V) oxide and from 0.05 to 4% by weight of tungsten(VI) oxide.

2. A nickel-antimony-rutile mixed-phase pigment as claimed in claim 1, in which the antimony/tungsten molar ratio is from 4 to 150.

3. A process for preparing a nickel-antimony-rutile mixed-phase pigment as claimed in claim 1 or 2, which comprises intimately mixing the oxides or oxide hydrates of titanium, nickel, antimony and tungsten, or salts of these metals which are convertible to the oxides, and calcining the resulting mixture under an oxidizing atmosphere at from 900 to 1200°C.

4. A process as claimed in claim 3, wherein the calcination product is subjected to dry grinding or to wet grinding with subsequent drying.

5. The use of a nickel-antimony-rutile mixed-phase pigment as claimed in claim 1 or 2 for coloring plastics, coating materials, printing inks and ceramic glazes.

## Revendications

1. Pigments à phase mixte rutile-antimoine-nickel contenant du tungstène, dans lesquels le rapport molaire nickel/tungstène vaut ≥ 4 et qui contiennent 65 à 90 % en poids de dioxyde de titane, 2 à 7 % en poids d'oxyde de nickel (II), 7 à 25 % en poids d'oxyde d'antimoine (V) et 0,05 à 4 % en poids d'oxyde de tungstène (VI).

2. Pigments à phase mixte rutile-antimoine-nickel suivant la revendication 1, dans lesquels le rapport molaire antimoine/tungstène vaut de 4 à 150.

3. Procédé pour la fabrication de pigments à phase mixte rutile-antimoine-nickel suivant la revendication 1 ou 2, **caractérisé en ce que** l'on mélange intimement les oxydes ou les oxyhydrates de titane, nickel, antimoine et tungstène ou des sels de ces métaux transformables en oxydes et on calcine le mélange obtenu sous atmosphère oxydante à 900 - 1200°C.

4. Procédé suivant la revendication 3, **caractérisé en ce que** l'on soumet le produit de calcination à un broyage à sec ou à un broyage humide suivi d'un séchage.

5. Utilisation de pigments à phase mixte rutile-antimoine-nickel suivant la revendication 1 ou 2 pour la coloration de matières plastiques, laques, encres d'imprimerie et glaçures céramiques.
